# EUROPÄISCHE PATENTSCHRIFT

(11) **EP 1 033 770 B1**
(45) Veröffentlichungstag und Bekanntmachung des Hinweises auf die Patenterteilung: **17.09.2008**
(21) Anmeldenummer: 00100786.3
(22) Anmeldetag: 15.01.2000
(51) Int. Cl.: H01M 8/06, B01J 4/00, B01J 4/02

(54) **Anordnung und Verfahren zur Druckbeaufschlagung eines Reaktanden**
Apparatus and method to pressurise a reactant
Appareillage et méthode de mise sous pression d'un reactif

(30) Priorität: 03.03.1999 DE 19909145
(43) Veröffentlichungstag der Anmeldung: 06.09.2000
(73) Patentinhaber: Daimler AG, 70327 Stuttgart (DE)
(72) Erfinder: Autenrieth, Rainer, 89155 Erbach (DE); Docter, Andreas, Dr., 88471 Laupheim (DE); Wieland, Steffen, 70180 Stuttgart (DE)

(56) Entgegenhaltungen:
- DE-C- 4 425 634
- US-A- 4 828 940
- US-A- 5 045 414

## Beschreibung

Die vorliegende Erfindung betrifft eine Anordnung und ein Verfahren zur Druckbeaufschlagung eines Reaktanden nach dem Oberbegriff des Patentanspruchs 1 bzw. dem Oberbegriff des Patentanspruchs 8.

Beispielsweise zum Betrieb von Brennstoffzellen mit protonenleitenden Elektrolytmembranen für mobile Anwendungen soll Wasserstoff aus einem Kohlenwasserstoff durch Wasserdampfreformierung und/oder partielle Oxidation erzeugt werden. Bei beiden Prozessen ist die Förderung und Dosierung der in flüssiger Form vorliegenden Reaktanden notwendig. Zum einen muß Kohlenwasserstoff und/oder Wasser in den Verdampfer zudosiert werden. Zum anderen muß zur Bereitstellung von Prozeßwärme der Kohlenwasserstoff zur anschließenden Verbrennung zudosiert werden. Außerdem muß Prozeßluft stets in ausreichendem Maße zur Verfügung stehen.

Aus der US-PS 5,248,566 ist beispielsweise eine Brennstoffzelle mit Reformer für ein Kraftfahrzeug bekannt, bei der dem Reformer Wasser, Luft und ein Kraftstoff, beispielsweise Methanol über eine Förderleitung zugeführt wird. Die Förderung und Dosierung des Wassers und des Methanols erfolgt üblicherweise über Dosierpumpen. In einem komplexen Brennstoffzellensystem kann es jedoch vorkommen, daß eine Vielzahl solcher Dosierpumpen benötigt wird.

Aus der DE 44 25 634 C1 ist eine Vorrichtung zum dosierten Zuführen von flüssigen Reaktanden aus einem Vorratsbehälter mittels einer Förderpumpe über eine Förderleitung zu einem Brennstoffzellensystem bekannt, bei welcher zwischen Förderpumpe und Brennstoffzellensystem ein Dosierventil in der Förderleitung angeordnet ist, und stromauf des Dosierventils eine Rückführleitung von der Förderleitung abzweigt und in der Rückführleitung ein Differenzdruckregler, der die Druckdifferenz zwischen Förderleitung und Brennstoffzellensystem auf einen vorgegebenen Wert einstellt, angeordnet ist. Die zu fördernden Reaktanden werden hierbei jeweils durch separate Pumpen auf den notwendigen Druck gebracht, und dem System direkt oder über Ventile zugeführt. Hierbei kann es durch aggressive Pumpenmedien, beispielsweise Methanol, oder durch Verschmutzungen zu Beschädigungen oder Beeinträchtigungen der Pumpen kommen. Durch die benötigte Vielzahl der Pumpen einschließlich der hiermit verbundenen Pumpensteuerung entsteht ein erheblicher Kostenfaktor. Andererseits stellt man bei Verwendung von preisgünstigen Pumpen fest, daß es bei Förderung von flüssigen Medien zu Druckstößen kommt, welche zu Schwankungen in der Dosierleistung führen. Ähnliche Schwierigkeiten treten auch bei Common-Rail-Systemen für Dieselverbrennungsmotoren oder Common-Rail-Reinstwassersystemen für Brennstoffzellensysteme auf.

Aufgabe der Erfindung ist die Schaffung eines Pumpensystems, welches gegenüber herkömmlichen Pumpensystemen bei gleicher Leistungsfähigkeit in einfacherer und preiswerterer Weise zu realisieren ist.

Diese Aufgabe wird gelöst durch eine Anordnung zur Druckbeaufschlagung wenigstens eines in einem Vorratsbehälter gespeicherten, zu fördernden Reaktanden mit den Merkmalen des Patentanspruchs 1 sowie ein entsprechendes Verfahren mit den Merkmalen des Patentanspruchs 8.

Erfindungsgemäß ist nun ein Pumpensystem geschaffen, bei welchem vermieden werden kann, daß die wenigstens eine Pumpe mit dem zu fördernden Reaktanden, insbesondere mit aggressiven Medien, in Berührung kommt. Ferner ermöglicht das erfindungsgemäße Pumpensystem eine genaue und zuverlässige Dosierung der Reaktanden.

Vorteilhafte Ausgestaltungen der erfindungsgemäßen Anordnung bzw. des erfindungsgemäßen Verfahrens sind Gegenstand der Unteransprüche.

Gemäß einer vorteilhaften Ausgestaltung der erfindungsgemäßen Anordnung sind mittels einer Förderpumpe mehrere Reaktanden, welche in verschiedenen Vorratsbehältern gespeichert sind, durch Förderung des Betriebsmediums druckbeaufschlagbar. Durch diese Maßnahme kann auf die Bereitstellung einzelner Pumpen für jeden zu fördernden Reaktanden verzichtet werden, wodurch die Kosten des Pumpensystems insgesamt reduzierbar sind. Es ist selbstverständlich ferner möglich, daß für den Fall, daß verschiedene Druckniveaus in dem System erforderlich sind, zwei oder mehrere derartige zentrale Pumpen eingesetzt werden.

Zweckmäßigerweise wird als Betriebsmedium ein gasförmiges Medium, insbesondere Luft, verwendet. Durch eine derartige Verwendung von Gasen als Betriebsmedium ist eine deutliche Verringerung von Druckstößen bei der Förderung der Reaktanden erzielbar.

Es erweist sich als vorteilhaft, die Förderleistung der Reaktanden aus ihrem jeweiligen Vorratsbehälter heraus mittels pulsartig betreibbarer Ventile zu steuern. Derartige Ventile sind in preiswerter Weise verfügbar und erweisen sich in der Praxis als robust und wenig wartungsanfällig.

Es ist ferner möglich, die Förderleistung der Reaktanden aus ihren jeweiligen Vorratsbehältern heraus mittels kontinuierlich betreibbarer Ventile, insbesondere Proportionalventile, deren Strömungsdurchschnitt variierbar ist, zu steuern. Durch diese Maßnahme ist eine besonders gleichmäßige Bereitstellung der Reaktanden beispielsweise für eine Brennstoffzelle erzielbar.

Zweckmäßigerweise ist wenigstens ein Druckhalteventil vorgesehen, mittels dessen der Druck des Betriebsmediums konstant gehalten werden kann. Hierdurch ist es möglich, eine relativ preiswerte Förderpumpe zur Förderung des Betriebsmediums bzw. zum Druckaufbau in den jeweiligen Vorratsbehältern zu verwenden.

Gemäß einer weiteren vorteilhaften Ausgestaltung der Erfindung ist das Betriebsmedium gleichzeitig als Reaktand des Gaserzeugungssystems verwendbar. Insbesondere bei Verwendung von Luft als Betriebsmedium kann diese beispielsweise dem CO-Oxidator eines Brennstoffzellensystems zugeführt werden.

Es ist gemäß einer weiteren vorteilhaften Ausgestaltung vorgesehen, daß in dem Rohrleitungssystem und/oder den Vorratsbehältern bewegliche Wände oder Kolben zur Vermeidung eines Kontaktes zwischen dem Betriebsmedium und den zu fördernden Reaktanden ausgebildet sind. Durch diese Maßnahme kann vermieden werden, daß es zwischen den jeweiligen Medien zu Diffusionseffekten kommt.

Es ist ferner möglich, in dem Rohrleitungssystem wenigstens ein Rückschlagventil vorzusehen. Mittels derartiger Rückschlagventile können ebenfalls Diffusionseffekte zwischen den jeweiligen Medien vermieden werden.

Gemäß einer weiteren vorteilhaften Ausgestaltung der Erfindung wird als Betriebsmedium ein Inertgas, insbesondere Stickstoff verwendet. Diese Maßnahme erweist sich insbesondere dann als vorteilhaft, wenn leicht zu oxidierende Flüssigkeiten gefördert werden sollen.

Eine bevorzugte Ausführungsform der erfindungsgemäßen Anordnung bzw. des erfindungsgemäßen Verfahrens wird nun unter Bezugnahme auf die beigefügte Zeichnung im einzelnen erläutert. In dieser zeigt:

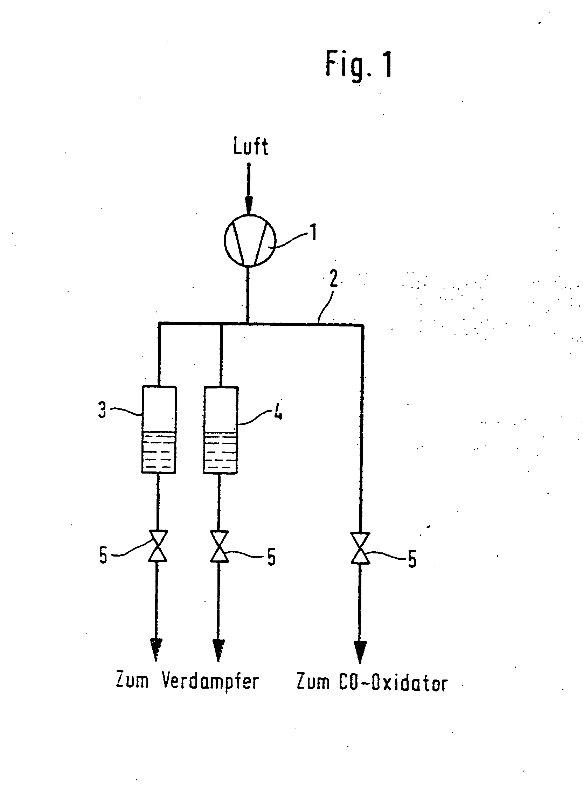

- Fig. 1: eine schematische Darstellung einer bevorzugten Ausgestaltung der erfindungsgemäßen Anordnung zur Druckbeaufschlagung von Reaktanden eines Brennstoffzellensystems.

Das in Fig. 1 dargestellte System weist eine zentrale Pumpe 1 auf, mittels der ein Rohrleitungssystem 2 druckbeaufschlagbar ist. Das Rohrleitungssystem 2 kommuniziert mit Vorratsbehältern 3, 4 sowie mit wenigstens einem Dosierventil 5. Im dargestellten Fall der Reaktandenzufuhr eines Brennstoffzellensystems ist in dem Vorratsbehälter 3 beispielsweise ein Treibstoff, insbesondere Methanol, und in dem Vorratsbehälter 4 Wasser gespeichert. Verursacht durch den durch die Förderpumpe 1 erzeugten Druck in den mit dem Rohrleitungssystem 2 kommunizierenden Vorratsbehältern 3, 4 werden die Medien innerhalb der Vorratsbehälter 3, 4 ebenfalls unter Druck gesetzt. Über jeweilige Dosierventile 5 sind die Medien hierdurch dem (nicht dargestellten) Verdampfer des Brennstoffzellensystems zuführbar.

Die als Betriebsmedium verwendete druckbeaufschlagte Luft innerhalb des Rohrleitungssystems 2 kann ferner als Prozeßluft, beispielsweise zur Verwendung durch einen (nicht dargestellten) CO-Oxidator des Brennstoffzellensystems verwendet werden. Es erweist sich als zweckmäßig, die Prozeßluft mittels eines weiteren Dosierventils 5 dem CO-Oxidator zur Verfügung zu stellen.

Es sei schließlich angemerkt, daß das dargestellte System auch für Common-Rail-Systeme beispielsweise für Dieselverbrennungsmotoren oder Reinstwassersysteme für Brennstoffzellensysteme verwendbar ist.

## Patentansprüche

1. Anordnung zur Druckbeaufschlagung wenigstens eines in wenigstens einem Vorratsbehälter (3, 4) gespeicherten, zu fördernden Reaktanden eines Gaserzeugungssystems,
**gekennzeichnet durch**
wenigstens eine Pumpe (1), mittels der ein Betriebsmedium, insbesondere über ein Rohrleitungssystem, zur Druckbeaufschlagung des wenigstens einen Reaktanden in den wenigstens einen Vorratsbehälter (3, 4) förderbar ist.

2. Anordnung nach Anspruch 1, **dadurch gekennzeichnet, daß** mittels der Förderpumpe mehrere Reaktanden, welche in unterschiedlichen Vorratsbehältern (3, 4) gespeichert sind, durch Förderung des Betriebsmediums druckbeaufschlagbar sind.

3. Anordnung nach einem der Ansprüche 1 oder 2, **dadurch gekennzeichnet, daß** als Betriebsmedium ein gasförmiges Medium, insbesondere Luft, verwendbar ist.

4. Anordnung nach einem der vorstehenden Ansprüche, **dadurch gekennzeichnet, daß** als Betriebsmedium ein Inertgas, insbesondere Stickstoff, verwendbar ist.

5. Anordnung nach einem der vorstehenden Ansprüche, **dadurch gekennzeichnet, daß** die Förderung der Reaktanden aus den Vorratsbehältern (3, 4) heraus mittels pulsartig betreibbarer Ventile (5) steuerbar ist.

6. Anordnung nach einem der vorstehenden Ansprüche 1 bis 4, **dadurch gekennzeichnet, daß** die Förderung der Reaktanden aus den Vorratsbehältern (3, 4) heraus mittels kontinuierlich betreibbarer Ventile (5), insbesondere Proportionalventile, deren Strömungsquerschnitt variierbar ist, steuerbar ist.

7. Anordnung nach einem der vorstehenden Ansprüche, **gekennzeichnet durch** wenigstens ein Druckhalteventil, mittels dessen der Druck des Betriebsmediums konstant gehalten werden kann.

8. Anordnung nach einem der vorstehenden Ansprüche, **dadurch gekennzeichnet, daß** das Betriebsmedium gleichzeitig als Reaktand des Gaserzeugungssystems verwendbar ist.

9. Anordnung nach einem der vorstehenden Ansprüche, **dadurch gekennzeichnet, daß** in dem Rohrleitungssystem (2) und/oder in wenigstens einem Vorratsbehälter (3, 4) bewegliche Wände oder Kolben zur Verhinderung eines Kontaktes zwischen dem Betriebsmedium und den zu fördernden Reaktanden vorgesehen sind.

10. Anordnung nach einem der vorstehenden Ansprüche, **dadurch gekennzeichnet, daß** in dem Rohrleitungssystem (2) wenigstens ein Rückschlagventil vorgesehen ist.

11. Verfahren zur Druckbeaufschlagung wenigstens eines in wenigstens einem Vorratsbehälter (3, 4) gespeicherten, zu fördernden Reaktanden eines Gaserzeugungssystems,
**dadurch gekennzeichnet,**
**daß** mittels wenigstens einer Förderpumpe (1) ein Betriebsmedium zur Druckbeaufschlagung des wenigstens einen Reaktanden insbesondere über ein Rohrleitungssystem (2) in den wenigstens einen Vorratsbehälter (3, 4) gefördert wird.

12. Verfahren nach Anspruch 11, **dadurch gekennzeichnet, daß** mittels der Förderpumpe mehrere Reaktanden, welche in unterschiedlichen Vorratsbehältern (3, 4) gespeichert sind, durch Förderung des Betriebsmediums druckbeaufschlagt werden.

13. Verfahren nach einem der vorstehenden Ansprüche 11 oder 12, **dadurch gekennzeichnet, daß** als Betriebsmedium ein gasförmiges Medium, insbesondere Luft, verwendet wird.

14. Verfahren nach einem der vorstehenden Ansprüche 11 bis 13, **dadurch gekennzeichnet, daß** als Betriebsmedium ein Inertgas, insbesondere Stickstoff, verwendet wird.

15. Verfahren nach einem der vorstehenden Ansprüche 11 bis 14, **dadurch gekennzeichnet, daß** die Förderung der Reaktanden aus den Vorratsbehältern (3, 4) heraus mittels pulsartig betriebener Ventile (5) gesteuert wird.

16. Verfahren nach einem der vorstehenden Ansprüche 11 bis 14, **dadurch gekennzeichnet, daß** die Förderung der Reaktanden aus den Vorratsbehältern (3, 4) heraus mittels kontinuierlich betreibbarer Ventile, insbesondere Proportionalventile, deren Strömungsquerschnitt variierbar ist, gesteuert wird.

17. Verfahren nach einem der vorstehenden Ansprüche 11 bis 16, **dadurch gekennzeichnet, daß** mittels wenigstens eines Druckhalteventils der Druck des Betriebsmediums in dem Rohrleitungssystem (2) bzw. den Vorratsbehältern (3, 4) konstant gehalten wird.

18. Verfahren nach einem der vorstehenden Ansprüche 11 bis 17, **dadurch gekennzeichnet, daß** das Betriebsmedium gleichzeitig als Reaktand des Gaserzeugungssystems verwendet wird.

## Claims

1. Arrangement for acting with pressure upon at least one reactant of a gas generation system, which reactant is stored in at least one reservoir (3, 4) and is to be conveyed, **characterized by** at least one pump (1), by means of which an operating medium can be conveyed into the at least one reservoir (3, 4), in particular via a pipeline system, in order to act with pressure upon the at least one reactant.

2. Arrangement according to Claim 1, **characterized in that,** by means of the conveying pump, a plurality of reactants which are stored in different reservoirs (3, 4) can be acted upon with pressure as a result of the conveyance of the operating medium.

3. Arrangement according to either of Claims 1 and 2, **characterized in that** a gaseous medium, in particular air, can be used as the operating medium.

4. Arrangement according to one of the preceding claims, **characterized in that** an inert gas, in particular nitrogen, can be used as the operating medium.

5. Arrangement according to one of the preceding claims, **characterized in that** the conveyance of the reactants out of the reservoirs (3, 4) can be controlled by means of valves (5) operable in a pulse-like manner.

6. Arrangement according to one of the preceding Claims 1 to 4, **characterized in that** the conveyance of the reactants out of the reservoirs (3, 4) can be controlled by means of continuously operable valves (5), in particular proportional valves, the flow cross section of which is variable.

7. Arrangement according to one of the preceding claims, **characterized by** at least one pressure-holding valve, by means of which the pressure of the operating medium can be kept constant.

8. Arrangement according to one of the preceding claims, **characterized in that** the operating medium can be used at the same time as a reactant of the gas generation system.

9. Arrangement according to one of the preceding claims, **characterized in that** moveable walls or pistons for preventing contact between the operating medium and the reactants to be conveyed are provided in the pipeline system (2) and/or in at least one reservoir (3, 4).

10. Arrangement according to one of the preceding claims, **characterized in that** at least one non-return valve is provided in the pipeline system (2).

11. Method for acting with pressure upon at least one reactant of a gas generation system, which reactant is stored in at least one reservoir (3, 4) and is to be conveyed, **characterized in that,** by means of at least one conveying pump (1), an operating medium is conveyed into the at least one reservoir (3, 4), in particular via a pipeline system (2) in order to act with pressure upon the at least one reactant.

12. Method according to Claim 11, **characterized in that,** by means of the conveying pump, a plurality of reactants which are stored in different reservoirs (3, 4) are acted upon with pressure as a result of the conveyance of the operating medium.

13. Method according to either of the preceding Claims 11 and 12, **characterized in that** a gaseous medium, in particular air, is used as the operating medium.

14. Method according to one of the preceding Claims 11 to 13, **characterized in that** an inert gas, in particular nitrogen, is used as the operating medium.

15. Method according to one of the preceding Claims 11 to 14, **characterized in that** the conveyance of the reactants out of the reservoirs (3, 4) is controlled by means of valves (5) operated in a pulse-like manner.

16. Method according to one of the preceding Claims 11 to 14, **characterized in that** the conveyance of the reactants out of the reservoirs (3, 4) is controlled by means of continuously operable valves, in particular proportional valves, the flow cross section of which is variable.

17. Method according to one of the preceding Claims 11 to 16, **characterized in that** the pressure of the operating medium in the pipeline system (2) or the reservoirs (3, 4) is kept constant by means of at least one pressure-holding valve.

18. Method according to one of the preceding Claims 11 to 17, **characterized in that** the operating medium is used at the same time as a reactant of the gas generation system.

## Revendications

1. Agencement de mise sous pression d'au moins un réactif à transporter d'un système de production de gaz, lequel ou lesquels réactifs sont conservés dans un récipient de réserve (3, 4),
**caractérisé par**
au moins une pompe (1) qui permet de refouler un fluide de travail, en particulier par l'intermédiaire un système de conduits tubulaires, pour placer sous pression le ou les réactifs situés dans le ou les récipients de réserve (3, 4).

2. Agencement selon la revendication 1, **caractérisé en ce que** la pompe de refoulement permet de placer sous pression plusieurs réactifs qui sont conservés dans différents récipients de réserve (3, 4) en refoulant le fluide de travail.

3. Agencement selon l'une des revendications 1 ou 2, **caractérisé en ce que** comme fluide de travail, on peut utiliser un fluide gazeux et en particulier l'air.

4. Agencement selon l'une des revendications précédentes, **caractérisé en ce que** comme fluide de travail, on peut utiliser un gaz inerte et en particulier l'azote.

5. Agencement selon l'une des revendications précédentes, **caractérisé en ce que** le transport des réactifs hors des récipients de réserve (3, 4) peut être commandé au moyen de soupapes (5) qui travaillent en mode pulsé.

6. Agencement selon l'une des revendications 1 à 4 qui précèdent, **caractérisé en ce que** le transport des réactifs hors des récipients de réserve (3, 4) peut être commandé au moyen de soupapes (5) qui peuvent être commandées en continu, en particulier des soupapes proportionnelles à section transversale d'écoulement variable.

7. Agencement selon l'une des revendications précédentes, **caractérisé par** au moins une soupape de maintien de pression qui permet de maintenir constante la pression du fluide de travail.

8. Agencement selon l'une des revendications précédentes, **caractérisé en ce que** le fluide de travail peut être en même temps utilisé comme réactif du système de production de gaz.

9. Agencement selon l'une des revendications précédentes, **caractérisé en ce que** des parois ou pistons mobiles qui empêchent le contact entre le fluide de travail et les réactifs à transporter sont prévus dans le système (2) de conduits tubulaires et/ou dans au moins un récipient de réserve (3, 4).

10. Agencement selon l'une des revendications précédentes, **caractérisé en ce qu'**au moins une soupape anti-retour est prévue dans le système (2) de conduits tubulaires.

11. Procédé de mise sous pression d'au moins un réactif à transporter d'un système de production de gaz, lequel ou lesquels réactifs sont conservés dans au moins un récipient de réserve (3, 4),
**caractérisé en ce que**
un fluide de travail qui place sous pression le ou les réactifs est refoulé dans le ou les récipients de réserve (3, 4) au moyen d'au moins une pompe de refoulement (1), en particulier par l'intermédiaire d'un système (2) de conduits tubulaires.

12. Procédé selon la revendication 11, **caractérisé en ce que** plusieurs réactifs conservés dans différents récipients de réserve (3, 4) peuvent être placés sous pression par refoulement du fluide de travail au moyen de la pompe de refoulement.

13. Procédé selon l'une des revendications 11 ou 12 qui précèdent, **caractérisé en ce que** comme fluide de travail, on utilise un fluide gazeux et en particulier l'air.

14. Procédé selon l'une des revendications 11 à 13 qui précèdent, **caractérisé en ce que** comme fluide de travail, on utilise un gaz inerte et en particulier l'azote.

15. Procédé selon l'une des revendications 11 à 14 qui précèdent, **caractérisé en ce que** le transport des réactifs hors des récipients de réserve (3, 4) est commandé par des soupapes (5) qui travaillent en mode pulsé.

16. Procédé selon l'une des revendications 11 à 14 qui précèdent, **caractérisé en ce que** le transport des réactifs hors des récipients de réserve (3, 4) est commandé par des soupapes (5) qui travaillent en continu et en particulier par des soupapes proportionnelles à section transversale d'écoulement variable.

17. Procédé selon l'une des revendications 11 à 16 qui précèdent, **caractérisé en ce que** la pression du fluide de travail dans le système (2) de conduits tubulaires ou les récipients de réserve (3, 4) est maintenue constante au moyen d'au moins une soupape de maintien de pression.

18. Procédé selon l'une des revendications 11 à 17 qui précèdent, **caractérisé en ce que** le fluide de travail est utilisé en même temps comme réactif du système de production de gaz.
